# EUROPEAN PATENT SPECIFICATION

(11) **EP 1 412 946 B1**
(45) Date of publication and mention of the grant of the patent: **23.03.2005**
(21) Application number: 02769089.0
(22) Date of filing: 26.07.2002
(51) Int. Cl.: G11B 23/03, G11B 33/04

(54) **HOLDER FOR A DISK-SHAPED DATA CARRIER**
TRÄGER FÜR PLATTENFORMIGEN DATENTRÄGERN
SUPPORT POUR SUPPORT DE DONNEES EN FORME DE DISQUE

(30) Priority: 26.07.2001 ZA 200106129
(43) Date of publication of application: 28.04.2004
(73) Proprietor: Versteijnen, Egidius Willem, 1560 Springs (ZA)
(72) Inventor: Versteijnen, Egidius Willem, 1560 Springs (ZA)
(74) Representative: Dearing-Lambert, Peter Richard
(86) International application number: PCT/ZA2002/000121
(87) International publication number: WO 2003/010767

(56) References cited:
- WO-A-95/06608
- US-A- 5 505 299
- US-A- 5 931 295
- US-B1- 6 209 719

## Description

### Field of the Invention

This invention relates to a holder for a disk-shaped data carrier.

### Background to the Invention

As worldwide standard for the storage of disk-shaped data carriers such as CDs, CD-ROMs, DVDs, etc., a box with a hinged lid is generally very widely known. Because of the various disadvantages of a storage system of this kind, all kinds of alternative holders are described in the patent literature, one category of which is holders with a case and carrier for a data carrier that can be moved in and out. Examples of patent specifications of this kind are the American patents US 5,706,939 and US 5,213,209.

In spite of the obvious disadvantages of the conventional holders with hinged lid, such as their fragility and the generally difficult opening of the hinged lid, until now no alternative holder with a movable carrier has been able to assume a serious market position in so far as it has appeared on the market at all. The reason for this is not least the fact that these holders with movable carriers are generally much too complex to be able to compete with regard to cost price with the conventional carriers with hinged lid. In this respect consider in particular the large number of parts used to construct holders of this kind with movable carriers, which involve high production and assembly costs. Apart from this disadvantage there are generally also other problems with the familiar holders with movable carriers with regard to practical ease of use.

A holder according to the first paragraph of this document is known from the American patent US 5,505,299. The holder described in this American patent comprises a case in which a number of carriers can be inserted on top of one another. These carriers have near the front on both sides of each carrier sprung lips that all have gripper parts, which gripper parts extend outside of the case on the sides through openings in the sides of the case in unloaded state of the sprung lips. On the back between each carrier and the case there is a spring element that ensures that a stop part of the sprung lip under the influence of this spring element is against a part of the edge of the opening of the case through which the gripper part in question extends. This prevents the carrier being pushed to the outside under the influence of the spring element. By the sideways pressing of the grip part the spring element is bent to the inside so that the stop part and the gripper part of the spring element completely pass the wall thickness of the case from the outside to the inside, so that the carrier is moved to the outside under the influence of the spring operation of the spring element.

Although the design of the holder according to the last-mentioned American patent is significantly simpler than that of the first two American patents, it still has disadvantages. These disadvantages are specifically linked to the fact that the sprung lip has to deform so much that the gripper part of it moves crossways on the movement direction over at least the wall thickness of the holder and even slightly further as the gripper part extends to outside the case in unoperated state. Because of the necessary deformation of the sprung lip this sprung lip should be manufactured of relatively high-quality plastic in order to withstand regularly the necessary deformation. The same requirement therefore applies to the remaining part of the carrier as the carrier and the sprung lip form an integral part. Because of the need to use a higher quality more expensive material the cost price of the holder is higher. In addition the sprung lip, or more specifically the gripper part of it, has on the front a sloping edge that at the start of the movement of the carrier out of the case scrapes along the front edge of the opening in the case through which the gripper part extends. This results in wear. This sloping edge is moreover necessary with the holder according to state of the art technology to prevent the fingers having to enter too deep into the opening through which the gripper part extends so that this gripper part passes completely the wall thickness of the case. This is also the reason that the geometry of both the case and the sprung lip around the position where the two are in contact is relatively complex, which also set higher requirements with regard to the injection moulds used to manufacture these parts. This again increases the cost price. Moreover the opening on the side of the case through which the gripper part of the sprung lip extends allows dirt and other undesirable matter to enter inside the case.

The inventor therefore believes that a need exists for offering a solution to the problems described above with holders of this kind according to the state of the art.

### Summary of the Invention

The invention relates to a holder for a disk-shaped data carrier comprising a rectangular case with a top and a bottom and in between extending sides and a back, a carrier to hold the data carrier on the top of the carrier, which carrier can be moved in a direction of movement with regard to the case through an opening on the front of the case between a closed position where the data carrier is completely inside the case and an open position where the data carrier is at least partly outside the case for the removal of the data carrier from the carrier, first spring mechanisms operating between the case and the carrier for the movement of the carrier at least partly from the closed position to the open position, blocking mechanisms for the holding in position of the carrier in the closed position against the operation of the first spring mechanisms, the blocking mechanisms comprising a first stop edge on the front of the case and a first stop connected to the carrier with second spring mechanisms that in the blocked position of the blocking mechanisms under the influence of the action of the first spring mechanisms is against the first stop edge and control mechanisms for the deactivation of the blocking mechanisms against the operation of the second spring mechanisms by the movement of the first stop so that the carrier in the blocked position of the blocking mechanisms where the first stop after its movement by the control mechanisms is free of the first stop edge under the influence of the operation of the first spring mechanisms for the movement at least partly from the closed position to the open position, the control mechanisms comprising a gripper part for the manual operation of the blocking mechanisms.

In the first instance the invention is characterized by the fact that the control mechanisms comprise third spring mechanisms that are connected to the case and have the gripper part for stop against the blocking mechanisms where the blocking mechanisms can be put in the unblocked position by stop by the third spring mechanisms from the closed position in an unoperated position of the blocked position during an operated mode against the operation of the third spring mechanisms. With the use of third spring mechanisms as described above in the first place advantage is gained because the second spring mechanisms have to be loaded less during the deactivation of the blocking mechanisms as the requirement that the second spring mechanisms or least their gripper part should extend outside the case to be gripped by fingers no longer applies. Consequently only a slight movement of the first stop and therefore slight deformation of the second spring mechanisms is sufficient to enable the outwards movement of the carrier. It is therefore possible to use a relatively low-quality plastic material, such as for example polystyrene, from which the second spring mechanisms can be manufactured where the second spring mechanisms are sufficiently resistant to frequent operation. It should be realized here that within the framework of the invention in principle it is even possible that the gripper part extends outside of the case, even in that situation where the contcol mechanisms have just put the blocking mechanisms in the unblocked position. This in contrast to the state of the art as described in US 5,505,299.

The third spring mechanisms preferably comprise a sprung third lip so that the required spring action can be obtained in a simple manner.

A large structural resistance to attempts to pull the carrier in blocked position out of the case is obtained if in the unoperated state a main direction of the third lip makes an angle with the direction of movement the size of which is between 10° and 45° and with further preference between 20° and 30°.

To further reduce the number of parts from which the holder is constructed the third lip should preferably be an integral part of the case. This removes the need to assemble on the one hand the third sprung lip with on the other hand the case of the holder.

The third lip preferably forms a part of a side of the case. This prevents the excessive use of material and moreover offers the opportunity to close an opening in a side of the case of which therefore a part of the edge forms the first stop edge with the third lip to prevent dirt and undesirable matter entering the inside of the case.

To enable controlled deformation of the third lip, this is preferably connected with the remaining part of the case via a narrower section.

To reduce even further the number of parts from which the holder is constructed the first spring mechanisms should preferably comprise a first lip that is an integral part of the case.

To prevent the carrier moving out too far which is undesirable there should preferably be end blocking mechanisms to block the further outwards movement of the carrier out of the case in the open position of the carrier.

End blocking mechanisms of this kind have the advantage of a second stop edge on the front of the case and a second stop connected to the carrier that in the open position of the carrier is against the second stop edge in a blocked position of the end blocking mechanisms.

As a further preference, end blocking mechanisms have fourth spring mechanisms that connect the second stop to the carrier under the influence of which fourth spring mechanisms the second stop is against the second stop edge. In this manner a very simple design of the holder is obtained.

Because of the simple design the fourth spring mechanisms should also have a sprung fourth lip.

The second stop edge should preferably be part of a second edge of a second opening in the case.

To simplify the design of the holder and to increase the functionality of the various parts of the holder the first stop edge and the second stop edge should be the same. In practice this means that the first opening is the same as the second opening and is preferably present in a side of the case.

To reduce further the number of parts required from which a holder is made according to the invention the first stop should preferably be an integral part of the second lip and/or the second stop is an integral part of the fourth lip.

The main dimensions of the case should preferably be 142 mm by 124 mm by 10 mm so that it is completely interchangeable with the standard holders with hinged lid. This is particularly important for the storage of the holders in already existing storage systems for holders.

A highly advantageous design feature of the invention is the fact that the blocking mechanisms are only present on the side of one of the two sides of the carrier. This makes it possible to put the holder, more specifically the housing, vertically on a side without the holder resting on a gripper part of the control mechanisms protruding outside the main dimensions of the case, as these control mechanisms are not required if there is no blocking mechanisms on one side of the carrier. In the vertically positioned state of the holder the blocking mechanisms (and the control mechanisms) are on the top in that case. The control mechanisms can be taken hold of easily manually from this side to operate the blocking mechanisms.

An extremely advantageous design is obtained if, in combination with the blocking mechanisms present on one side, between the holder and the carrier in a direction perpendicular to the direction of movement there is play at least of the size of the contact between the first stop edge of the case and the first stop connected to the carrier seen in a direction perpendicular to the direction of movement in the blocked position of the blocking mechanisms. The main advantage of this design is the fact that it is then possible to unblock the blocking mechanisms not only using the control mechanisms, but also by pressing from the front against the carrier on that side of the carrier away from the blocking mechanisms. The carrier will then assume a slightly incorrect position in the holder (as the play referred to permits this) so that the movement of the first stop required to deactivate the blocking mechanisms is obtained. To close the holder again by sliding in the carrier it is sufficient to press the carrier from the front into the case by pressing on the front of the carrier on the side of the blocking mechanisms. By pushing the carrier closed in this way the incorrect position referred to above is corrected so that the first stop is once more behind the first stop edge and the blocked position of the blocking mechanisms is obtained once more.

The advantages as described above of the blocking mechanisms located on one side only are not limited to designs where there are third spring mechanisms according to the main aspect of the invention. For example, by modifying a holder according to US 5,505,299 in the sense that the blocking mechanisms are only present on one side, the advantages described above can be obtained. Although it is advantageous regarding the obtaining of the specific advantages linked with the blocking mechanisms located on one side, it is itself not strictly necessary that there are second spring mechanisms. In principle the first stop can also be rigidly connected to the carrier, where to close the holder during the pushing closed of the carrier in the case, this carrier can be pushed manually from the front of the carrier so that the first stop is once more behind the first stop edge.

According to a preferred embodiment, the carrier has first positioning mechanisms on the underneath turned away from the top for the positioning of a first sheet of paper against the underside. This means that if the carrier is taken completely out of the case the information on the first sheet of paper remains attached to the carrier and any data carrier on this.

To hold a narrow strip of paper on the front of the holder, as is already known with traditional state of the art holders, the carrier should preferably have a gap on the front.

This gap should preferably be open on the underside so that a sheet of paper folded along a folding line, with a part of the folded paper laid on one side of the folding line, forms the narrow strip of paper and the part of the folded sheet of paper laid on the other side of the folding line, forms the first sheet of paper can be accommodated as a whole by the carrier. This simplifies the industrial attachment of paper material of this kind.

So that the holder can accommodate at least a second sheet of paper, for example in the form of an information booklet as is frequently the case with traditional holders, the holder should preferably have second positioning mechanisms for the positioning of at least a second sheet of paper against the inside of the top.

In particular, for the removal of this second sheet of paper, it is extremely advantageous if the top of the case on the one hand and the bottom of the case and the carrier on the other hand are connected to one another hinged around an axis in the vicinity of and parallel to the back of the case. The second sheet of paper can be accessed in a simple manner by hinging open the top.

If according to another preferred embodiment the second positioning mechanisms or at least a part of them are hinged together with the top with regard to the bottom and the carrier, the second sheet of paper will also hinge with the top.

As it has been found in practice that users find the use of a clamping central body awkward, the carrier on the top of this should preferably have a rigid central body for non-clamping extension through a central hole in the data carrier. This also prevents the need for the user to exercise relatively large forces on the carrier and/or the holder as a whole in order to remove the data carrier from the carrier.

To prevent that, with the use of a hinged top on the case, as described above, the data carrier comes loose from the carrier which is undesirable, the case should preferably have third positioning mechanisms on a part connected rigidly to the bottom of the case to block from the top of the data carrier. Third positioning mechanisms of this kind prevent the removal of the data carrier from the carrier, only in the closed position, while in the open position the third positioning mechanisms no longer block the data carrier.

### Detailed Description of the Invention

The invention will now be described by way of the following three preferred but non-limiting embodiments with reference to the accompanying drawings.

In the drawings:-
Figure 1 shows in three views in European projection a carrier of a holder according to a first embodiment of the invention;
Figure 2 shows in three views in European projection a case of a holder according to a first embodiment of the invention;
Figure 3A shows parts of the holder and the case of figures 1 and 2 in detail in closed position in a blocked position;
Figure 3B shows parts of the holder and the case in detail in closed position in an unblocked position;
Figure 3C shows figure 3A in side view;
Figures 4A to 4D show a way in which the holder can be used according to the first embodiment of the invention;
Figure 5 shows an exploded view of a second preferred embodiment of a holder according to the invention;
Figure 6 shows a top view of the environment of the blocking mechanisms of the second embodiment;
Figure 7 shows a side view of the carrier of the holder according to the second embodiment of the invention; and
Figure 8 shows a perspective view of a third preferred embodiment of a holder according to the invention.

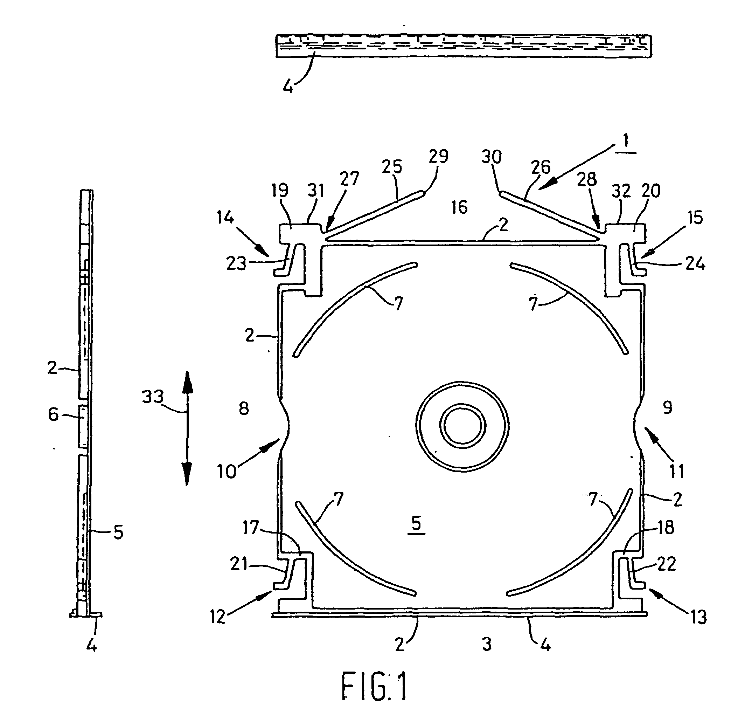

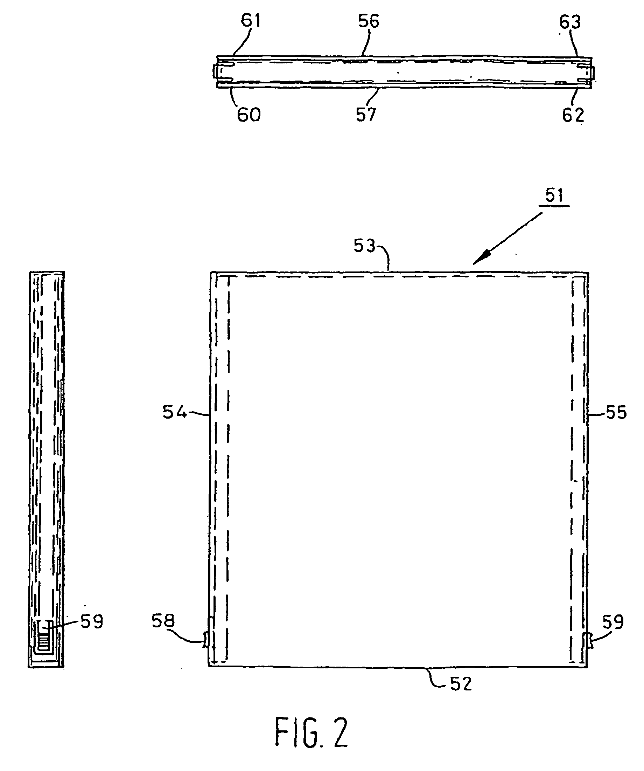

A first preferred embodiment of a holder according to the invention consists only of a carrier (see figure 1) and a case (see figure 2).

Figure 1 shows carrier 1 in three vertical views. Carrier 1 is a polycarbonate or even more preferable a polystyrene (cheaper than polycarbonate) injection-molded product that consists of one part only. Carrier 1 is mainly rectangular in shape and is for the most part surrounded by a thickened edge 2. There is a closing edge 4 on the front 3. Inside the edge 2, approximately at the height of the center of the closing edge 4, carrier 1 has a relatively thin support surfaces. On the support surface 5 there are an innermost circle edge 6 and four outermost circle segment edges 7, the dimensions and positioning of which are such that a disk-shaped data carrier, in the following indicated by the term CD disk, can be laid on the support surface 5, where the innermost circle edge 6 just extends through the central opening of the CD disk, while the edge of the CD disk just connects on the insides of the outermost circle segment edges 7. On the two sides 8, 9 of carrier 1 the mainly rectangular shape of carrier 1 is interrupted in the center by bent recessed parts 10, 11 so that a user can take a CD-disk positioned as above out of the carrier between thumb and (fore) finger.

The thickened edge 2 has on all four comers of the carrier 1 U-shaped parts 12, 13, 14, 15 the open sides of which are directed towards the sides 8, 9. J-shaped lips 21, 22, 23, 14 extend from the legs 17, 18,19, 20 of the respective U-shaped parts 12, 13, 14, 15 located on the back 16 of carrier 1. Because of their suitable dimensions and the intrinsic properties of the polycarbonate material from which carrier 1 is manufactured, these J-shaped lips 21, 22, 23, 24 are to a limited extent connected by a spring mechanisms with the remaining part of carrier 1. The same applies to lips 25, 26 on the back 16 of carrier 1. These lips 25, 26 extend from the angular points 27, 28 between the back of U-shaped parts 14, 15 and the edge 2 in so far as located on the back 16, obliquely inwards and backwards. The spring capacity of the lips 25, 26 is such that these can be deformed elastically to a situation where the ends 29, 30 of lips 25, 26 and also the lips 25, 26 in their whole are located on the front 3 of the outer sides 31, 32 of legs 19, 20. As will become clearer from the following, carrier 1 is suitable to be slid inside case 40 in a movement direction according to double arrow 33, which will be explained further using figure 2.

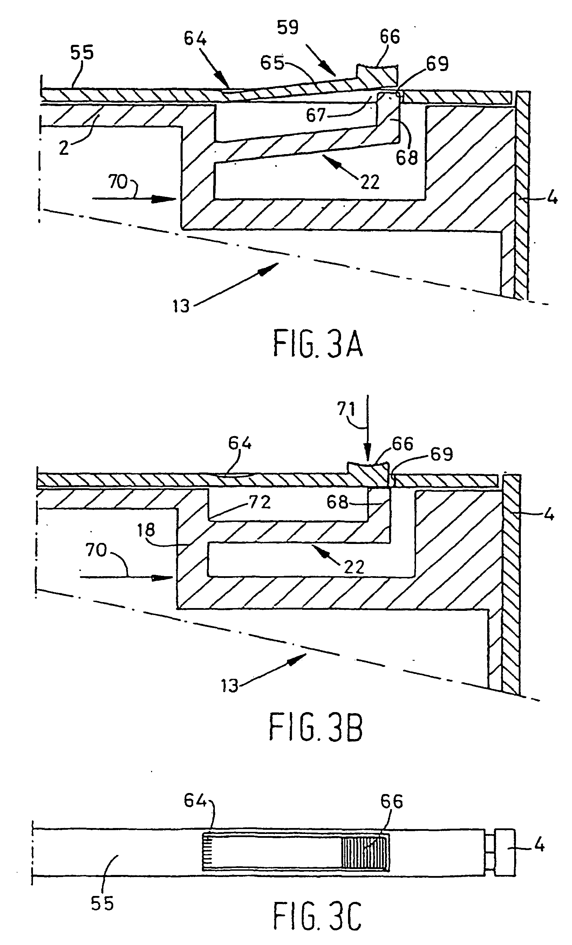

Figure 2 shows case 51 that is intended for inclusion in carrier 1 described above. Just as carrier 1 case 51 is manufactured of transparent polycarbonate or polystyrene by injection molding. The case 51 is mainly a hexagonal box shape with front 52, back 53, sides 54, 55, top 56 and bottom 57. With the exception of front 52 all sides 53, 54, 55, 56, 57 are closed or at least mainly closed. On the side of front 52 there is for each side 54, 55 control lips 58, 59 that at that place form a part of the side 54, 55 in question. The control lips 58, 59 and their function will be explained further using the figures 3A to 3C. There are two guide edges 60, 61 and 62, 62 on the inside of each side 54, 55. The guide edges 60, 61, 62, 63 are suitable for guiding between them the edge 2 of carrier 1 in so far as this extends on one of the two sides 8, 9, which means that carrier 1 can also be moved inside case 51. Both between guide edges 61, 63 and top 56 and between guide edges 60, 62 and bottom 57 there is room for information on paper, such as a sheet of paper that describes the musical origin of the corresponding music CD disk or a small booklet with song texts. This kind of information can moreover also be put on a strip of paper material on the inside of back 53 that for example is connected along a fold to the sheet of paper suggested above.

The figures 3A, 3B and 3C show the environment of U-shaped part 13 in the situation where carrier 1 is inserted completely in the case 51 and is therefore in the closed position. Closing edge 4 of carrier 1 closes here on sides 54, 55, which means that the opening on front 52 of the case 51 is closed. Control lip 59 is connected to side 55 by means of integral connection 64. In fact the integral connection 64 forms a part of side 55 with a thinner wall thickness. Control lip 59 comprises a strip-shaped part 65 with on the end a gripper part 66 for a finger. In unoperated position, as in figure 3A the strip-shaped part 65 diverges sideways slightly so that the gripper part 66 is outside side 55. There is therefore an opening 67 in side 55 directly under the gripper part 66. The horizontal part 68 of the J-shaped lip 22 extends with its end in this opening 67 so that this horizontal part 68 forms a stop against stop edge 69 that forms part of an edge for opening 67. It should be realized here that in the closed position lips 25, 26 of carrier 1 are under spring tension against the inside of back 53 of case 51. This is shown schematically with arrow 70. Because of the contact of the horizontal part 68 against stop edge 69 carrier 1 is unable to move in the direction of arrow 70.

The situation of figure 3A in operated position is shown in figure 3B where under the influence of a force according to arrow 71 that is normally exercised by a finger on gripper part 66 this gripper part 66 pushes the horizontal part 68 inwards so that it comes free from stop edge 69. Integral connection 64 and integral connection 72 not indicated previously between J-shaped lip 22 and leg 18 of the U-shaped part 13 then operate as an elastic hinge. Under the influence of the elastic spring operation of lips 25 and 26 the carrier 1 will now move in the direction of arrow 70 as soon as the horizontal part 68 comes free from the stop edge 69. As soon as horizontal part 68 has passed stop edge 69, the force can be removed according to arrow 71, after which control lip 59 assumes the position again according to figure 3A.

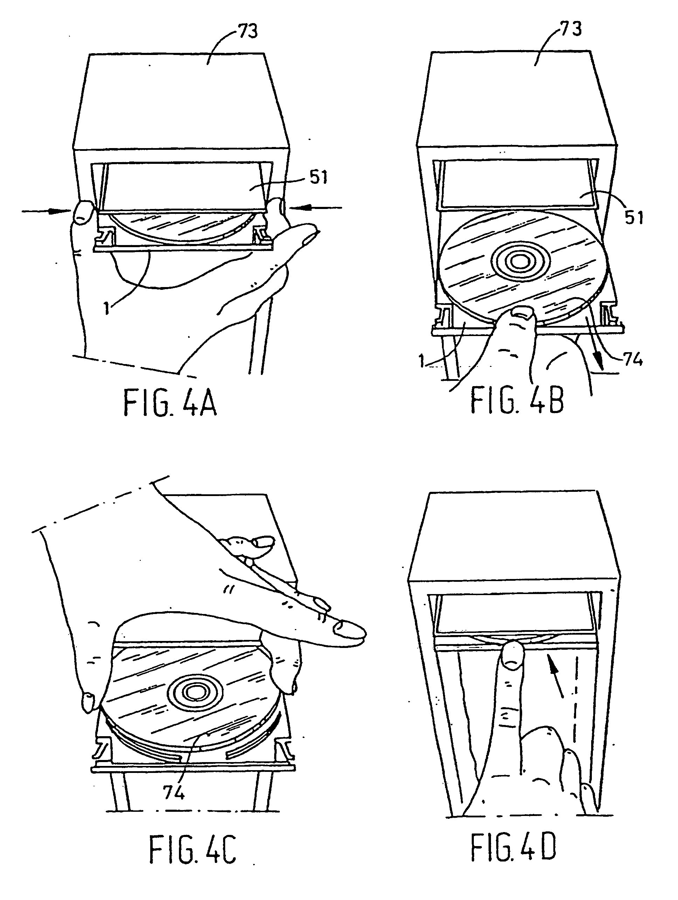

Figures 4A to 4D show consecutive situations with the use of the holder described above. Here the holder is in a storage system the depth of which is less than the measured length of sides 54 and 55 so that control lips 58 and 59 are outside the storage system 73. In the first instance (figure 4A) from the situation where the carrier is in the closed position the control lips 58, 59 are pressed in towards one another, so that a blocked position is reached where under the influence of lips 25, 26 the carrier 1 is slid out of case 51. The carrier 1 is then slid further out of the case 51 (figure 4B) by pulling it out between thumb and forefinger. The ends of the horizontal parts of J-shaped lips 23, 24 slide here along the insides of the respective sides 54, 55 of case 51 until these ends are included in opening 67 and in the comparable opening in side 54 under the influence of their spring attachment to the remaining part of carrier 1. By now pressing in the control lips 58, 59 at the same time and pulling carrier 1 to the outside, it is possible to remove carrier 1 completely out of the case 51 if required. This is however not necessary for the removal of the disk-shaped CD 74 as is clear in frgure 4C. To close the holder (figure 4D) where the carrier is moved from the open position to the closed position, it is sufficient to press the carrier inwards where consecutively the J-shaped lips 23, 24 and 21, 22 are pressed inwards along the inside of the sides 54, 55 until the situation is again obtained as in figure 3B.

Apart from the extremely simple operation of the holder according to the invention, the holder is also very simple to produce as, on the basis of the injection molding process, in principle only two molds are required. One mould for the carrier and one mould for the holder. Moreover within the framework of the invention it is not strictly necessary that the holder consists of only two parts. For example the lips 25, 26 may also be manufactured from sprung steel, one end of which is fitted in a groove made in the carrier. As an example of an alternative design the innermost circle edge 6 may be made up of sprung circle segments with a sprung attachment on the central opening of a disk-shaped CD. The holder also makes it possible that they no longer have to be taken from a storage system for holders, to remove the disk-shaped data carrier from the holder, which increases the neatness and ease of use, but for example also increases the safety when used in a car. This latter is due to the fact that there is no need for loose holders and the fact that the holder can be operated by one hand from the front of the holder.

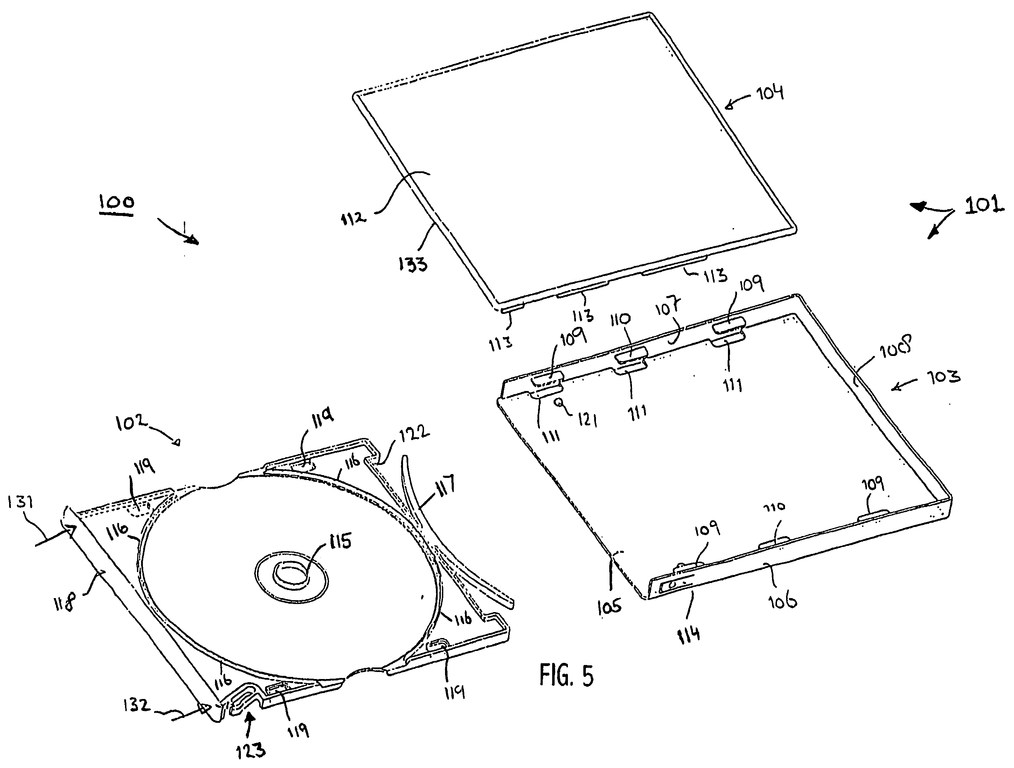

The second preferred embodiment of a holder 100 according to the invention is shown in figures 5, 6 and 7 comprises a case 101 and a carrier 102 that can be slid in and out of the case 101. Case 101 consists of a bottom part 103 and a lid part 104. The bottom part 103 comprises a rectangular bottorn 105 and along three of the four straight outsides of this raised surfaces, namely sides 106, 107 and back 108. On the front of the bottom part 103 there is no raised surface so that there is an opening available for carrier 102 here. The sides 106, 107 each have three lips facing inwards, namely outermost lips 109 and innermost lips 110. At the point of these lips 109, 110 there are injection-molded openings 111 in the bottom 105, of which only those openings 111 are visible on the side of side 107 in figure 5. As the expert knows the function of these injection-molding machine openings 111 is based on the requirements set by the injection-molding process.

Lid part 104 comprises a top 112 along a part of the side from which guide ribs 113 protrude. By means of an ultrasonic welding process the bottom part 103 and the lid part 104 are connected together at the point of the top edges of the sides 106, 107 and back 108. Here the guide ribs 113 protrude between or at least next to the lips 109, 110 so that these lips 109, 110 together with the guide ribs 113 form a guide edge for the carrier 102 that can be slid between this guide and the bottom 105. Between the top of the lips 109, 110 and the underside of top 112 there is space available for the storage of for example a booklet containing information on the data carrier to be stored in the holder 100.

Although in the example given the bottom part 103 and the lid part 104 are initially separate parts that are connected together, it is also possible to manufacture case 101 directly as one part by means of injection molding.

For reasons to be explained further the case 101 or more specifically the bottom part 103 of it only has a sprung control lip 114 on the side of side 106 in the side 106 on the front of the holder 100.

Carrier 102 has a centering body 115 on the top and an interrupted circular raised edge 116. On the back the carrier 102 has a bent spring 117 that is connected in its middle with the remaining part of the carrier 102 and forms an integral part of it. Alternatively it is also highly feasible to make this sprung lip 117 as a replaceable part of carrier 102, so that this sprung lip 117 for example can also be manufactured of a higher-quality material than the remaining part of carrier 102. It is also possible with the use of a two-shot injection-molding machine to manufacture the plastic material of lip 117 from another kind than the remaining part of carrier 102, where the sprung lip 117 still forms an integral part with the remaining part of carrier 102.

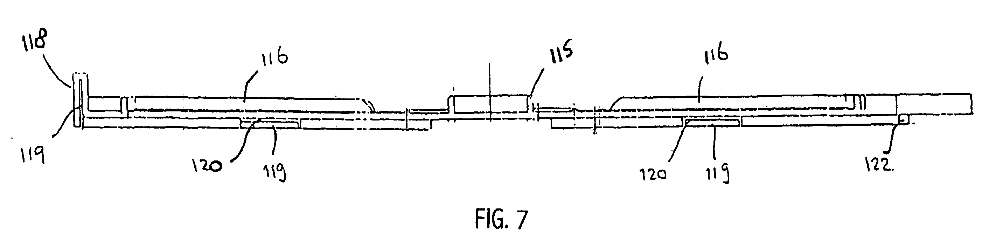

On the front carrier 102 has a raised edge 118. As shown in figure 7 this raised edge 118 has internally a gap 119 that is open on the underside. Under the main surface of carrier 102 there are lips 119 directed inwards on the sides of carrier 102, which lips 119 are comparable with the lips 109, 110 of the bottom part. Between the top of the lips 119 and the bottom of the main surface of carrier 102 there is still a limited distance 120 available through which a rectangular sheet the shape of which corresponds with that of the main surface of carrier 102 can be inserted between the four lips 119 and the underside of the main surface of carrier 102. A folded end of this sheet can be inserted in gap 119 of the front raised edge 118, which is in any case of transparent material, so that information on the folded part is visible from the front of holder 100. The result of this is that the sheet in question is moved jointly with carrier 102. It will be clear that for information on the underside of the sheet to be visible at the point of the main surface of carrier 102, even in the closed position, the bottom 105 is also of transparent material.

To prevent the carrier 102 being moved too far out of the case 101 there are two protrusions 121 directed upwards on the top of bottom 105, against which downwards directed edges 122 that are in the same crossways position as stop protrusions 121 stop against these protrusions 121. The dimensions and shape of the stop protrusions 121 and the stop edges 122 are such that a slight extra moving out force exercised on the carrier 102 is sufficient to pull this carrier 102 completely out of the case 101.

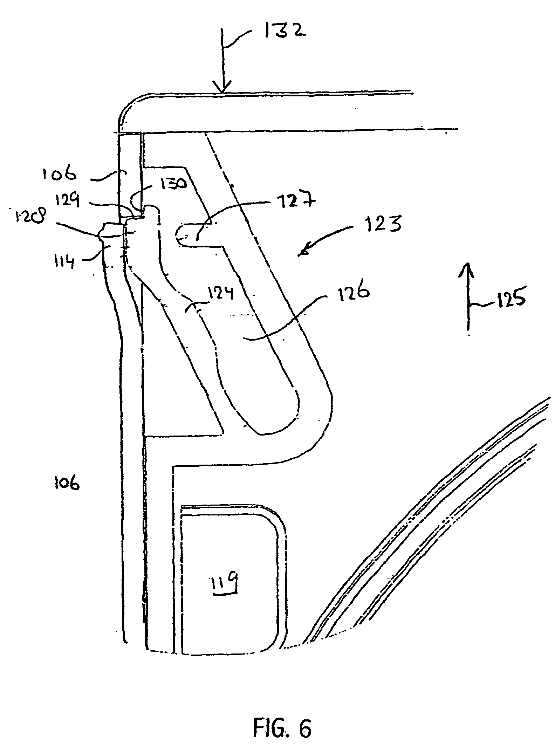

Carrier 102 has also blocking mechanisms 123 that are intended to work together with control lip 114 and the environment of which is shown in more detail in figure 6. Blocking mechanism 123 comprises a sprung lip 124 the main direction of which makes an angle of approximately 24° with the movement direction 125. The sprung lip 124 extends within a recess 126 that generally has the shape of a right-angled triangle. A stop protrusion 127 extends from the slanting side of this triangular shape in the direction of the end of sprung lip 124.

At the point of this end of sprung lip 124 it has a stop part 128 with at its end a first stop surface 129 and crossways on it a second stop surface 130. Because of the action of lips 117 the first stop surface 129 is against the front of the edge of the opening within which control lip 114 extends. The second stop surface 130 is against the inside of side 106 because of pretension present in sprung lip 124. To move the carrier 102 out of the case 101 a user just has to press control lip 114 from the side over a distance so that stop part 128 passes the inside of side 106. immediately after this passing the carrier 102 will be moved out by the action of lip 117, which moving out can be followed if necessary by hand by pulling the carrier 102 on the raised edge 118 to the outside. Stop protrusion 127 ensures that sprung lip 124 cannot be deformed too much. Because of the use of control lip 114 the deformation of sprung lip 124 is minimal, therefore this sprung lip 124 can be manufactured from a low-quality plastic material with limited elastic properties, such as for example polystyrene.

Although it is not visible in one of the figures there is a limited play of 1.5 mm in the direction perpendicular to the direction of movement 125 between sides 106, 107 of the case and the side edges of carrier 102. This distance is greater than the dimensions of first stop surface 129 seen in the direction perpendicular to the direction of movement 125. This play in combination with the blocking mechanisms 123 only present on one side has the major advantage that it is possible to open the holder 100 in a second way in addition to operation of control lip 114. This second way involves the pressing from the front against raised edge 118 at the point of indicator number 131 in figure 5. As a result of this carrier 102 is incorrectly positioned within case 101, so that because of the available play the first stop surface 129 passes the inside of side 106 without touching the control lip 114.

To close the holder 100 it is sufficient to press once more the carrier 102 according to arrow 132 laid on the side of the blocking mechanisms 123, so that the incorrect position is corrected and the first stop surface 129 again comes to rest against the edge of the opening in side 106. To facilitate this movement it is advantageous if carrier 102 has a guide surface, preferably orientated at an angle of approximately 45° to the direction of movement, which guide surface in case 101 runs against the front edge 133 of lid part 104 if the carrier 102 is positioned too high. A guide surface of this kind should be present immediately behind raised edge 118.

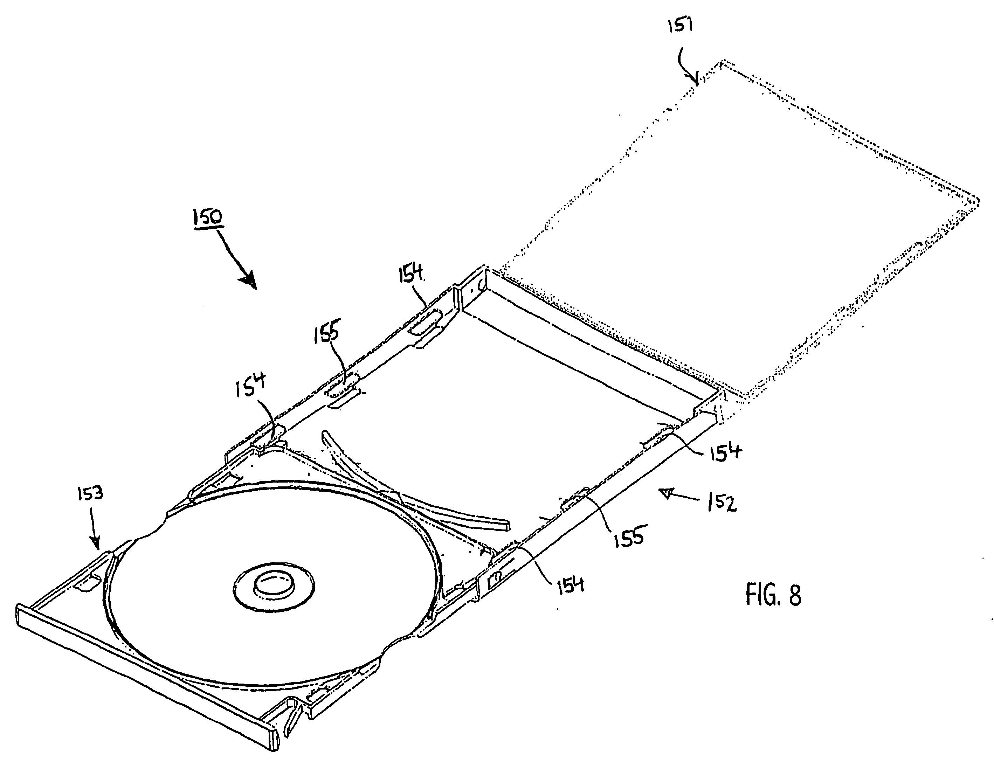

Figure 8 shows the third preferred embodiment of a holder 150 according to the invention. This holder 150 largely corresponds with the holder 100 according to the second design. An important difference however is the fact that lid part 151 is hinged to the bottom part 152, which parts together form a case for an extendable carrier 153. The hinged axis is located on the back of the bottom part 152. The advantage of this design is the greater accessibility of a paper sheet, for example in the form of an information booklet present between outermost lips 154 and innermost lips 155 on the one hand and the bottom of lid part 151 in closed position on the other hand. In a variant on this design it is possible that the innermost lips 155 form part of lid part 151 so that the paper information is also turned over when the lid part 151 is opened.

It is to be appreciated, that the invention is not limited to any specific embodiment or configuration as hereinbefore generally described or illustrated.

## Claims

1. A holder for a disk-shaped data carrier comprises:-
- a rectangular case (51) with a top (56) and a bottom (57) and in between extending sides and a back, a carrier (1) to hold the data carrier on the top of the carrier, which carrier can be moved in a direction of movement (33) with regard to the case through an opening on the front of the case between a closed position where the data carrier is completely inside the case and an open position where the data carrier is at least partly outside the case for the removal of the data carrier from the carrier;
- first spring mechanisms (25, 26) operating between the case and the carrier for the movement of the carrier at least partly from the closed position to the open position; and
- blocking mechanisms (12, 13) for holding the carrier in position in the closed position against the operation of the first spring mechanisms, the blocking mechanisms comprising a first stop edge (69) on the front of the case and a first stop (68) connected to the carrier with second spring mechanisms (21, 22) that in a blocked position of the blocking mechanisms under the influence of the action of the first spring mechanisms is against the first stop edge; **characterized by**
- control mechanisms (66) for the deactivation of the blocking mechanisms against the operation of the second spring mechanisms by moving the first stop so that the carrier in the blocked position of the blocking mechanisms where the first stop after its movement by the blocking mechanisms is free from the first stop edge under the influence of the action of the first spring mechanisms is moved at least partly from the closed position to the open position, the control mechanisms comprising a gripper part for the manual operation of the blocking mechanisms, with the feature that the control mechanisms comprises third spring mechanisms (65) that are connected to the case that have the gripper part for stop against the blocking mechanisms where the blocking mechanisms by stop by the third spring mechanisms from the closed position in an unoperated position of the blocked position during an operated position against the operation of the third spring mechanisms can be put in the unblocked position.

2. A holder as claimed in claim 1, wherein the third spring mechanisms comprise a sprung third lip.

3. A holder as claimed in claim 2, wherein in the unoperated position a main direction of the third lip makes an angle with the direction of movement the size of which is between 10 degrees and 45 degrees and is preferably between 20 degrees and 30 degrees.

4. A holder as claimed in claim 2 or claim 3, wherein the third lip is an integral part of the case.

5. A holder as claimed in any one of claims 2 to 4 wherein the third lip is part of a side of the case.

6. A holder as claimed in claim 4 or claim 5, wherein the third lip is connected via a narrower section with the remaining part of the case.

7. A holder as claimed in any one of the preceding claims wherein the first spring mechanisms comprise a first lip that is an integral part of the case.

8. A holder as claimed in any one of the preceding claims wherein the holder has end blocking mechanisms to block the further movement of the carrier out of the case in the open position of the carrier.

9. A holder as claimed in claim 8 wherein the end blocking mechanisms have a second stop edge on the front of the case and a second stop connected to the carrier that is against the second stop edge in the open position of the carrier in a blocked position of the end blocking mechanisms.

10. A holder as claimed in claim 9 wherein the end blocking mechanisms comprise fourth spring mechanisms that connect the second stop with the carrier under the influence of which fourth spring mechanisms the second stop is against the second stop edge.

11. A holder as claimed in claim 10 wherein the fourth spring mechanisms have a sprung fourth lip.

12. A holder as claimed in any one of claims 9 to 11 wherein the first stop edge and the second stop edge are the same.

13. A holder as claimed in any one of the preceding claims wherein the external dimensions of the case are 142 mm by 124 mm by 10 mm.

14. A holder as claimed in any one of the preceding claims wherein the blocking mechanisms are only present on the side of one of the two sides of the carrier.

15. A holder as claimed in claim 14 wherein between the holder and the carrier in a direction perpendicular to the direction of movement there is play of at least the size of the contact between the first stop edge of the case and the first stop connected to the carrier seen in a direction perpendicular to the direction of movement in the blocked position of the blocking mechanisms.

16. A holder as claimed in any one of the preceding claims wherein the carrier has on the bottom turned on the top first positioning devices for the positioning of a first sheet of paper against the underside.

17. A holder as claimed in any one of the preceding claims wherein the carrier has on the front a gap to hold a narrow strip of paper.

18. A holder as claimed in claim 16 and claim 17 wherein the gap on the underside is open to hold a sheet of paper folded along a folding line, where a part of the folded sheet of paper placed on one side of the folded line, forms the narrow strip of paper and the part of the folded sheet of paper placed on the other side of the folded line, forms the first sheet of paper.

19. A holder as claimed in any one of the preceding claims wherein the holder has second positioning mechanisms to position at least a second sheet of paper against the inside of the top.

20. A holder as claimed in any one of the preceding claims wherein the top of the case on the one hand and the bottom of the case and the carrier on the other hand, are hinged together around an axis located near and parallel to the back of the case.

21. A holder as claimed in claim 19 and claim 20 wherein the second positioning mechanisms jointly with the top are hinged to the bottom and the carrier.

22. A holder as claimed in any one of the preceding claims wherein the carrier has on the top a rigid central body for non-clamping extension through a central hole in the data carrier.

23. A holder as claimed in claim 20 and claim 22 wherein the case has third positioning mechanisms on a part connected rigidly with the bottom of the case to block from the top of the data carrier, so that the data carrier is released from the central body.

## Patentansprüche

1. Halter für einen scheibenförmigen Datenträger, der Folgendes umfasst:
- ein rechteckiges Gehäuse (51) mit einem Oberteil (56) und einem Unterteil (57) und dazwischen verlaufenden Seiten und einer Rückseite, einen Träger (1) zum Halten des Datenträgers auf dem Oberteil des Trägers, wobei dieser Träger in einer Bewegungsrichtung (33) in Bezug auf das Gehäuse durch eine Öffnung auf der Frontseite des Gehäuses zwischen einer geschlossenen Position, in der sich der Datenträger vollständig in dem Gehäuse befindet, und einer offenen Position bewegt werden kann, in der der Datenträger wenigstens teilweise außerhalb des Gehäuses ist, um den Datenträger aus dem Träger herauszunehmen;
- erste Federmechanismen (25, 26), die zwischen dem Gehäuse und dem Träger wirksam sind, um den Träger wenigstens teilweise aus der geschlossenen Position in die offene Position zu bewegen; und
- Sperrmechanismen (12, 18) zum Festhalten des Trägers in der geschlossenen Position gegen die Betätigung der ersten Federmechanismen, wobei die Sperrmechanismen eine erste Anschlagkante (69) auf der Frontseite des Gehäuses und einen ersten Anschlag (68) umfassen, der mit dem Träger mit zweiten Federmechanismen (21, 22) verbunden ist, die in einer gesperrten Position der Sperrmechanismen unter dem Einfluss der Wirkung der ersten Federmechanismen gegen die erste Anschlagkante ist [sic]; **gekennzeichnet durch**
- Steuermechanismen (66) zum Deaktivieren der Sperrmechanismen gegen die Betätigung der zweiten Federmechanismen **durch** Bewegen des ersten Anschlags, so dass der Träger in der gesperrten Position der Sperrmechanismen, in der der erste Anschlag nach seiner Bewegung **durch** die Sperrmechanismen von der ersten Anschlagkante unter dem Einfluss der Wirkung der ersten Federmechanismen frei ist, wenigstens teilweise von der geschlossenen Position in die offene Position bewegt wird, wobei die Steuermechanismen einen Griffteil zum manuellen Betätigen der Sperrmechanismen umfasst, mit dem Merkmal, dass die Steuermechanismen dritte Federmechanismen (65) umfassen, die mit dem Gehäuse verbunden sind, mit dem Griffteil als Anschlag gegen die Sperrmechanismen, wo die Sperrmechanismen **durch** Anschlag **durch** die dritten Federmechanismen von der geschlossenen Position in eine unbetätigte Position der gesperrten Position während einer betätigten Position gegen die Betätigung der dritten Federmechanismen in die ungesperrte Position gebracht werden kann. [sic]

2. Halter nach Anspruch 1, wobei die dritten Federmechanismen eine gefederte dritte Lippe umfassen.

3. Halter nach Anspruch 2, wobei in der unbetätigten Position eine Hauptrichtung der dritten Lippe einen Winkel zu der Bewegungsrichtung bildet, dessen Größe zwischen 10 Grad und 45 Grad und vorzugsweise zwischen 20 und 30 Grad liegt.

4. Halter nach Anspruch 2 oder Anspruch 3, wobei die dritte Lippe ein integraler Bestandteil des Gehäuses ist.

5. Halter nach einem der Ansprüche 2 bis 4, wobei die dritte Lippe Teil einer Seite des Gehäuses ist.

6. Halter nach Anspruch 4 oder Anspruch 5, wobei die dritte Lippe über einen schmäleren Abschnitt mit dem übrigen Teil des Gehäuses verbunden ist.

7. Halter nach einem der vorherigen Ansprüche, wobei die ersten Federmechanismen eine erste Lippe umfassen, die ein integraler Bestandteil des Gehäuses ist.

8. Halter nach einem der vorherigen Ansprüche, wobei der Halter Endsperrmechanismen hat, um eine weitere Bewegung des Trägers aus dem Gehäuse in der offenen Position des Trägers zu verhindern.

9. Halter nach Anspruch 8, wobei die Endsperrmechanismen eine zweite Anschlagkante auf der Frontseite des Gehäuses und einen zweiten Anschlag haben, der mit dem Träger verbunden ist, der in der offenen Position des Trägers in einer gesperrten Position der Endsperrmechanismen an der zweiten Anschlagkante anliegt.

10. Halter nach Anspruch 9, wobei die Endsperrmechanismen vierte Federmechanismen umfassen, die den zweiten Anschlag mit dem Träger verbinden, wobei unter dem Einfluss der vierten Federmechanismen der zweite Anschlag an der zweiten Anschlagkante anliegt.

11. Halter nach Anspruch 10, wobei die vierten Federmechanismen eine gefederte vierte Lippe haben.

12. Halter nach einem der Ansprüche 9 bis 11, wobei die erste Anschlagkante und die zweite Anschlagkante dieselben sind.

13. Halter nach einem der vorherigen Ansprüche, wobei die Außenabmessungen des Gehäuses 142 mm x 124 mm x 10 mm betragen.

14. Halter nach einem der vorherigen Ansprüche, wobei die Sperrmechanismen nur auf der Seite von einer der beiden Seiten des Trägers vorhanden sind.

15. Halter nach Anspruch 14, wobei zwischen dem Halter und dem Träger in einer Richtung lotrecht zur Bewegungsrichtung ein Spiel von wenigstens der Größe des Kontakts zwischen der ersten Anschlagkante des Gehäuses und dem ersten Anschlag vorliegt, der mit dem Träger verbunden ist, betrachtet in einer Richtung lotrecht zur Bewegungsrichtung in der gesperrten Position der Sperrmechanismen.

16. Halter nach einem der vorherigen Ansprüche, wobei der Träger am Unterteil nach oben gekehrt erste Positionierungsvorrichtungen zum Legen eines ersten Blattes Papier auf die Unterseite hat.

17. Halter nach einem der vorherigen Ansprüche, wobei der Träger auf der Frontseite einen Spalt zum Halten eines schmalen Papierstreifens hat.

18. Halter nach Anspruch 16 und Anspruch 17, wobei der Spalt an der Unterseite offen ist, um ein entlang einer Falzlinie gefaltetes Blatt Papier zu halten, wobei ein Teil des gefalteten Blattes Papier, der auf einer Seite der gefalteten Linie liegt, den schmalen Papierstreifen bildet, und der Teil des gefalteten Blattes Papier, der auf der anderen Seite der gefalteten Linie liegt, das erste Blatt Papier bildet.

19. Halter nach einem der vorherigen Ansprüche, wobei der Halter zweite Positionierungsmechanismen zum Legen von wenigstens einem zweiten Blatt Papier gegen die Innenseite des Oberteils aufweist.

20. Halter nach einem der vorherigen Ansprüche, wobei der Oberteil des Gehäuses einerseits und der Unterteil des Gehäuses und der Träger andererseits um eine Achse in der Nähe von und parallel zu der Rückseite des Gehäuses aneinander angelenkt sind.

21. Halter nach Anspruch 19 und Anspruch 20, wobei die zweiten Positionierungsmechanismen zusammen mit dem Oberteil am Unterteil und am Träger angelenkt sind.

22. Halter nach einem der vorherigen Ansprüche, wobei der Träger auf dem Oberteil einen starren mittleren Körper für eine klemmfreie Verlängerung durch ein mittleres Loch in dem Datenträger aufweist.

23. Halter nach Anspruch 20 und Anspruch 22, wobei das Gehäuse dritte Positionierungsmechanismen auf einem Teil hat, der starr mit dem Unterteil des Gehäuses verbunden ist, um vom Oberteil des Datenträgers zu sperren, so dass der Datenträger vom mittleren Körper gelöst wird.

## Revendications

1. Un dispositif de fixation pour un support de données en forme de disque comprend :
un coffret rectangulaire (51) avec un dessus (56) et un dessous (57) et s'étendant entre ces derniers des côtés et un dos, un support (1) pour tenir le support de données sur le dessus du support, lequel support peut être déplacé dans un sens de déplacement (33) par rapport au coffret à travers une ouverture sur le devant du coffret entre une position fermée où le support de données est complètement à l'intérieur du coffret et une position ouverte où le support de données est au moins partiellement à l'extérieur du coffret pour le retrait du support de données du support ;
des premiers mécanismes à ressort (25, 26) fonctionnant entre le coffret et le support pour le déplacement du support au moins partiellement de la position fermée à la position ouverte ; et
des mécanismes de blocage (12, 13) pour tenir le support en position à la position fermée contre le fonctionnement des premiers mécanismes à ressort, les mécanismes de blocage comprenant un premier bord de butée (69) sur le devant du coffret et une première butée (68) raccordée au support par des deuxièmes mécanismes à ressort (21, 22) qui à une position bloquée des mécanismes de blocage sous l'influence de l'action des premiers mécanismes à ressort est contre le premier bord de butée ; **caractérisé par**
des mécanismes de commande (66) pour la désactivation des mécanismes de blocage contre le fonctionnement des deuxièmes mécanismes à ressort par le déplacement de la première butée, de sorte que le support à la position bloquée des mécanismes de blocage où la première butée après son déplacement par les mécanismes de blocage est libérée du premier bord de butée sous l'influence de l'action des premiers mécanismes de blocage, est déplacé au moins partiellement de la position fermée à la position ouverte, les mécanismes de commande comprenant une partie préhenseur pour le fonctionnement manuel des mécanismes de blocage, avec la particularité que les mécanismes de commande comprennent des troisièmes mécanismes à ressort (65) qui sont raccordés au coffret, qui ont la partie préhenseur pour buter contre les mécanismes de blocage où les mécanismes de blocage par la butée par les troisièmes mécanismes à ressort depuis la position fermée à une position de non-fonctionnement de la position bloquée pendant une position de fonctionnement contre le fonctionnement des troisièmes mécanismes à ressort, peuvent être mis en position débloquée.

2. Un dispositif de fixation selon la revendication 1, où les troisièmes mécanismes à ressort comprennent une troisième lèvre élastique.

3. Un dispositif de fixation selon la revendication 2, où à la position de non-fonctionnement un sens principal de la troisième lèvre fait un angle avec le sens de déplacement dont la dimension est comprise entre 10 degrés et 45 degrés, et de préférence entre 20 degrés et 30 degrés.

4. Un dispositif de fixation selon la revendication 2 ou la revendication 3, où la troisième lèvre fait partie intégrante du coffret.

5. Un dispositif de fixation selon l'une quelconque des revendications 2 à 4 où la troisième lèvre fait partie d'un côté du coffret.

6. Un dispositif de fixation selon la revendication 4 ou la revendication 5, où la troisième lèvre est raccordée via une section plus étroite à la partie restante du coffret.

7. Un dispositif de fixation selon l'une quelconque des revendications précédentes où les premiers mécanismes à ressort comprennent une première lèvre qui fait partie intégrante du coffret.

8. Un dispositif de fixation selon l'une quelconque des revendications précédentes, où le dispositif de fixation a des mécanismes de blocage d'extrémité pour bloquer le déplacement ultérieur du support à l'extérieur du coffret à la position ouverte du support.

9. Un dispositif de fixation selon la revendication 8 où les mécanismes de blocage d'extrémité ont un deuxième bord de butée sur le devant du coffret et une deuxième butée raccordée au support qui est contre le deuxième bord de butée à la position ouverte du support à une position bloquée des mécanismes de blocage d'extrémité.

10. Un dispositif de fixation selon la revendication 9 où les mécanismes de blocage d'extrémité comprennent des quatrièmes mécanismes à ressort qui raccordent la deuxième butée au support sous l'influence desquels quatrièmes mécanismes à ressort la deuxième butée est contre le deuxième bord de butée.

11. Un dispositif de fixation selon la revendication 10 où les quatrièmes mécanismes à ressort ont une quatrième lèvre élastique.

12. Un dispositif de fixation selon l'une quelconque des revendications 9 à 11 où le premier bord de butée et le deuxième bord de butée sont les mêmes.

13. Un dispositif de fixation selon l'une quelconque des revendications précédentes où les dimensions extérieures du coffret sont de 142 mm sur 124 mm sur 10 mm.

14. Un dispositif de fixation selon l'une quelconque des revendications précédentes où les mécanismes de blocage ne sont présents que sur le côté de l'un des deux côtés du support.

15. Un dispositif de fixation selon la revendication 14 où entre le dispositif de fixation et le support dans un sens perpendiculaire au sens de déplacement, il y a un jeu d'au moins la dimension du contact entre le premier bord de butée du coffret et la première butée raccordée au support vu dans un sens perpendiculaire au sens de déplacement à la position bloquée des mécanismes de blocage.

16. Un dispositif de fixation selon l'une quelconque des revendications précédentes où le dispositif de fixation a sur le dessous tourné sur les premiers dispositifs de positionnement du dessus pour le positionnement d'une première feuille de papier contre la partie de dessous.

17. Un dispositif de fixation selon l'une quelconque des revendications précédentes où le dispositif de fixation a sur le devant un espace pour tenir une bande mince de papier.

18. Un dispositif de fixation selon la revendication 16 et la revendication 17 où l'espace sur la partie de dessous est ouverte pour tenir une feuille de papier pliée le long d'une ligne de pliage, où une partie de la feuille de papier pliée placée sur un côté de la ligne pliée, forme la bande mince de papier et la partie de la feuille de papier pliée placée de l'autre côté de la ligne pliée, forme la première feuille de papier.

19. Un dispositif de fixation selon l'une quelconque des revendications précédentes où le dispositif de fixation a des deuxièmes mécanismes de positionnement pour positionner au moins une deuxième feuille de papier contre la partie intérieure du dessus.

20. Un dispositif de fixation selon l'une quelconque des revendications précédentes où le dessus du coffret d'une part et le dessous du coffret et le dispositif de fixation d'autre part, sont articulés ensemble autour d'un axe situé proche du et parallèle au dos du coffret.

21. Un dispositif de fixation selon la revendication 19 et la revendication 20 où les deuxièmes mécanismes de positionnement conjointement avec le dessus sont articulés avec le dessous et le support.

22. Un dispositif de fixation selon l'une quelconque des revendications précédentes où le support a sur le dessus un corps rigide central pour un prolongement non serrant à travers un trou central dans le support de données.

23. Un dispositif de fixation selon la revendication 20 et la revendication 22 où le coffret a des troisièmes mécanismes de positionnement sur une partie raccordée rigidement avec le dessous du coffret pour le bloquer du dessus du support de données, de sorte que le support de données soit relâché du corps central.
